# FASCICULE DE BREVET EUROPEEN

(11) **EP 3 718 884 B1**
(45) Date de publication et mention de la délivrance du brevet: **02.06.2021**
(21) Numéro de dépôt: 20161193.6
(22) Date de dépôt: 05.03.2020
(51) Int. Cl.: B64C 25/54, B64C 25/56, B64D 47/06, B64C 25/32, B63C 9/20

(54) **AÉRONEF MUNI D'UN SYSTÈME DE FLOTTABILITÉ, ET PROCÉDÉ DE FLOTTABILITÉ**
LUFTFAHRZEUG, DAS MIT EINEM AUFTRIEBSSYSTEM AUSGESTATTET IST, UND AUFTRIEBSVERFAHREN
AIRCRAFT PROVIDED WITH A FLOTATION SYSTEM, AND FLOTATION METHOD

(30) Priorité: 04.04.2019 FR 1903615
(43) Date de publication de la demande: 07.10.2020
(73) Titulaire: Airbus Helicopters, 13725 Marignane Cedex (FR)
(72) Inventeur: SZYMANSKI, Eric, 13220 CHATEAUNEUF LES MARTIGUES (FR)
(74) Mandataire: GPI Brevets

(56) Documents cités:
- EP-A1- 3 162 712
- WO-A2-2006/046038
- GB-A- 2 535 189
- US-A- 3 092 854

## Description

La présente invention concerne un aéronef muni d'un système de flottabilité. Dès lors, l'invention se situe dans le domaine technique des systèmes de flottabilité d'un aéronef, et plus particulièrement d'un aéronef à voilure tournante.

Un tel système de flottabilité participe à la flottaison et à la stabilité d'un aéronef suite à un amerrissage.

Un système de flottabilité peut comprendre des flotteurs. Les flotteurs sont par exemple fixés de part et d'autre d'une cellule de l'aéronef. Le terme « cellule » désigne notamment une partie de l'aéronef logeant un poste de pilotage et/ou une cabine et/ou une soute et pouvant comprendre un train d'atterrissage. Le terme « passager » et le terme « naufragé » utilisés par la suite désignent chacun un individu présent dans l'aéronef. Sur un hélicoptère, la cellule porte le rotor principal de l'hélicoptère. Par exemple, des flotteurs sont fixés à un train d'atterrissage de la cellule, ou encore à une paroi de la cellule.

Par ailleurs, les flotteurs sont par exemple pliés dans des conditions de vol normales, puis déployés avant ou après un amerrissage. Un système de flottabilité muni de flotteurs pliés comporte alors un moyen de déploiement pour déployer les flotteurs, et par exemple un système mécanique ou un gonfleur. Le terme « gonfleur » désigne tout système permettant de gonfler au moins un flotteur, à savoir permettant de le déplier pour le rendre opérationnel. Ainsi, le gonfleur peut être un dispositif injectant un fluide dans un flotteur. Le gonfleur peut être par exemple un gonfleur électrique, explosif, à gaz comprimé ou chimique.

Certains systèmes de flottabilité comprennent un moyen de déploiement dont l'activation est commandée par exemple par le pilote et/ou par le copilote et/ou par un dispositif de déclenchement automatique. Par exemple, un bouton est placé sur un manche manœuvré par un pilote, ce bouton étant relié à un gonfleur. La manœuvre du bouton induit alors le gonflage des flotteurs.

Dès lors, des flotteurs peuvent être déployés pour maintenir un aéronef à flot. Néanmoins, les passagers présents dans l'aéronef peuvent avoir des difficultés pour s'orienter et évacuer l'aéronef, notamment de nuit ou par mauvais temps. Pour faciliter l'extraction de passagers, un aéronef peut comprendre des bandes réfléchissantes. Cependant, une fois en dehors de l'aéronef, un passager peut avoir des difficultés pour localiser un canot et/ou pour aider d'autres naufragés par exemple. L'extraction d'un passager en dehors d'un aéronef immergé est d'autant plus délicate en cas de retournement de l'aéronef dans l'eau puisque les passagers présents dans l'aéronef se trouvent dans une situation stressante et déstabilisante en l'absence de repère.

Eventuellement, un passager peut porter un éclairage individuel de type lampe de poche. Une telle lampe fournit un éclairage unidirectionnel ne permettant pas d'avoir une vue d'ensemble de l'environnement. En outre, les naufragés n'ont parfois pas le temps ou la présence d'esprit d'allumer une telle lampe. Les naufragés s'orientent alors par tâtonnement ce qui s'avère stressant.

Le document DE102014224671 propose une veste de survie rétroéclairée.

Par ailleurs, des équipes de sauvetage peuvent avoir des difficultés pour repérer l'aéronef sur l'eau suite à un amerrissage. Un aéronef peut alors comprendre au moins une balise de détresse. De telles balises de détresse sont efficaces pour localiser une zone dans laquelle se trouve l'aéronef, mais la localisation précise de l'aéronef dans cette zone peut être délicate de nuit ou par mauvais temps. En outre, les secouristes peuvent éprouver des difficultés pour évaluer la situation, à savoir pour déterminer si l'aéronef est éventuellement retourné et/ou pour déterminer où se trouvent le cockpit et les cabines de l'aéronef.

Dans ce contexte, le document WO2008/132461 et le document US 2010/0150655 proposent d'illuminer une scène maritime via des systèmes gonflables et largables par un véhicule de secours.

Le document WO2006/046038 décrit un aéronef muni de flotteurs gonflables. Un flotteur peut porter une lampe clignotante.

Le document EP 3162712, le document GB 2535189 et le document US 3092854 sont aussi connus.

La présente invention a alors pour objet de proposer un système de flottabilité innovant pour tendre à faciliter l'extraction de passagers et le repérage de l'aéronef de nuit voire par mauvais temps.

L'invention vise ainsi un aéronef muni d'un système de flottabilité, ledit système de flottabilité comprenant une pluralité de flotteurs. Eventuellement, chaque flotteur de ladite pluralité de flotteurs peut être stocké sous forme plié en vol en dehors d'une phase d'amerrissage, ledit système de flottabilité comprenant un système de déploiement pour déployer chaque flotteur de ladite pluralité de flotteurs dans le cadre d'un amerrissage. Chaque flotteur comporte une enveloppe séparant un espace interne du flotteur d'un milieu extérieur situé à l'extérieur du flotteur.

De plus, au moins un desdits flotteurs est un flotteur lumineux, le flotteur lumineux comportant au moins une source de lumière interne disposée dans ledit espace interne de ce flotteur lumineux, ladite enveloppe d'un flotteur lumineux étant au moins partiellement translucide.

L'expression « source de lumière » désigne un équipement émettant une lumière par exemple sous condition d'activation.

Ainsi, chaque flotteur lumineux est éclairé par l'intérieur à l'aide d'une ou plusieurs sources de lumières, ce flotteur étant de plus au moins localement translucide pour que la lumière soit diffusée à l'extérieur du flotteur. Les flotteurs peuvent alors être visibles, éventuellement au travers des hublots de l'aéronef. L'enveloppe du flotteur représente une membrane qui diffuse la lumière, éventuellement dans toutes les directions.

L'éclairage ainsi produit peut permettre de localiser visuellement par mauvais temps ou de nuit un aéronef qui a amerri. De plus, cet éclairage peut permettre à chaque passager de localiser une sortie de l'aéronef pour s'extraire en dehors de l'aéronef et/ou pour localiser d'autres passagers, pour localiser un canot de sauvetage... Si un aéronef est retourné en présentant une cabine immergée, les passagers peuvent voir leur environnement afin de localiser les sorties de l'aéronef et par exemple des poignées de largage de hublots ou de portes. Cet éclairage n'est pas réalisé par une lampe manuelle entravant les mouvements des passagers, ces passagers pouvant au contraire se servir de leurs mains pour manipuler un matériel de secours, monter à bord d'un canot... L'éclairage de la zone environnant l'aéronef par un ou plusieurs flotteurs lumineux peut faciliter de manière générale les opérations de sauvetage.

Cet aéronef peut de plus comporter une ou plusieurs des caractéristiques qui suivent.

Par exemple, chaque flotteur peut être un flotteur lumineux.

Selon un aspect, au moins une source de lumière peut comporter une source primaire déclenchée électriquement et agencée dans l'espace interne d'un flotteur lumineux.

L'expression « source primaire déclenchée électriquement » signifie que la source émet une lumière suite à la réception d'un signal électrique. Par exemple, une source primaire déclenchée électriquement peut comprendre au moins un filament d'une ampoule, au moins une diode électroluminescente, au moins une source chimique sollicitée électriquement...

Selon un aspect, l'aéronef peut comporter au moins un organe électrique commandable alimentant électriquement sur commande au moins une source de lumière.

Un tel organe électrique peut être d'un type usuel et peut comprendre par exemple un interrupteur, un commutateur, un relais électrique...

Chaque organe électrique commandable peut être commandé par une commande dédiée, par exemple manœuvrable par un pilote avant ou après amerrissage. Selon un autre exemple, chacun des organes électriques commandables peut être commandé par une commande automatique avant ou après amerrissage, et par exemple une commande automatique commandant les moyens de déploiement des flotteurs. Ainsi, le déploiement des flotteurs s'accompagnent de l'allumage de chaque source de lumière. Chaque organe électrique commandable peut commander une ou plusieurs sources de lumière.

L'organe électrique commandable peut être agencé dans l'espace interne d'un flotteur lumineux.

Selon un autre exemple, un organe électrique commandable peut être agencé en dehors d'un flotteur lumineux. Eventuellement, un unique organe électrique commandable centralisé dans une cellule de l'aéronef commande l'alimentation électrique de plusieurs sources de lumières, et par exemple de plusieurs sources de lumières disposées dans des flotteurs différents.

Selon un aspect, l'aéronef peut comporter au moins une source d'énergie électrique reliée par une liaison électrique à au moins une dite source de lumière.

Une telle liaison électrique peut comprendre un organe électrique commandable. Une source d'énergie électrique peut comprendre une batterie électrique ou une pile par exemple.

Eventuellement, une source d'énergie électrique peut être agencée dans l'espace interne d'un flotteur.

Le flotteur peut alors être autonome électriquement.

Selon un autre exemple, une source d'énergie électrique peut être agencée en dehors d'un flotteur lumineux. Eventuellement, une unique source d'énergie électrique alimente électriquement plusieurs sources de lumière, et par exemple plusieurs ampoules disposées dans des flotteurs différents.

Selon un autre aspect et une première réalisation d'un flotteur lumineux, l'enveloppe d'un flotteur lumineux peut être totalement translucide.

L'enveloppe diffuse une lumière dans toutes les directions.

Selon une deuxième réalisation d'un flotteur lumineux, l'enveloppe d'un flotteur lumineux peut être partiellement translucide, ladite enveloppe comprenant au moins une portion opaque empêchant la diffusion d'une lumière vers le milieu extérieur selon certaines directions.

Par exemple, une portion opaque peut être réalisée pour former une flèche ou pour éviter d'éblouir un pilote. Par exemple une enveloppe peut comprendre un tissu translucide recouvert localement d'un tissu opaque pour former une portion opaque.

Selon une possibilité, ladite enveloppe d'un flotteur lumineux comporte en élévation de bas en haut parallèlement à un axe de lacet de l'aéronef un tronçon inférieur au moins partiellement translucide et une dite portion opaque, le tronçon inférieur au moins partiellement translucide et la portion opaque étant tous deux visibles selon une direction parallèle à un axe de tangage de l'aéronef.

Dès lors, vue de côté le flotteur présente de bas en haut un tronçon inférieur émettant une lumière surmonté d'une portion opaque. La portion opaque est éventuellement orientée vers un pilote ce qui permet d'éviter d'éblouir ce pilote lors de l'éclairage du flotteur lumineux.

De manière complémentaire ou alternative, ladite enveloppe d'un flotteur lumineux peut comporter un tronçon partiellement translucide muni d'au moins une dite portion opaque en forme de flèche dirigée selon une direction parallèle à une direction allant du nez vers une sortie de l'aéronef ou de la queue de l'aéronef vers ladite sortie, ladite portion opaque en forme de flèche étant visible selon une direction parallèle à un axe de lacet de l'aéronef.

Par exemple, un tronçon inférieur présente une flèche opaque. Des sauveteurs pourront avoir une indication de l'emplacement de ladite sortie lorsque l'aéronef est retourné.

L'invention et ses avantages apparaîtront avec plus de détails dans le cadre de la description qui suit avec des exemples donnés à titre illustratif en référence aux figures annexées qui représentent :
[Fig 1] la figure 1, un schéma illustrant un aéronef selon l'invention,
[Fig 2] la figure 2, une vue en trois dimensions d'un aéronef selon l'invention,
[Fig 3] la figure 3, une vue partielle de côté d'un aéronef selon l'invention, et
[Fig 4] la figure 4, une vue partielle de dessous d'un aéronef selon l'invention.

Les éléments présents dans plusieurs figures distinctes sont affectés d'une seule et même référence.

Trois directions X, Y et Z orthogonales les unes par rapport aux autres sont représentées sur certaines figures.

La première direction X est dite longitudinale. La deuxième direction Y est dite transversale. Enfin, la troisième direction Z est dite en élévation.

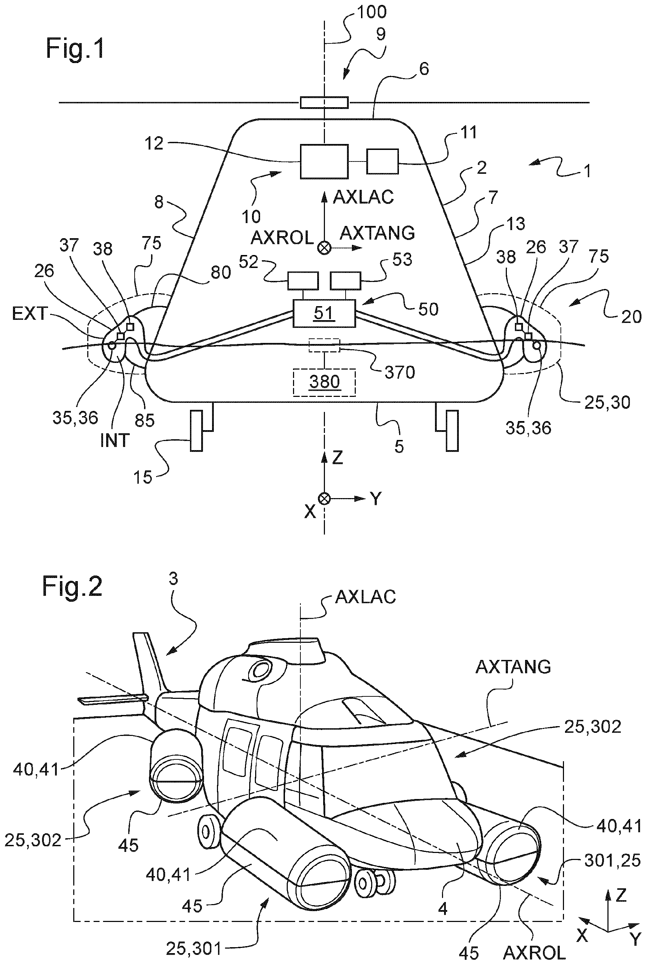

La figure 1 présente un aéronef 1 muni d'un système de flottabilité 20 selon l'invention. Cet aéronef 1 peut par exemple être un giravion.

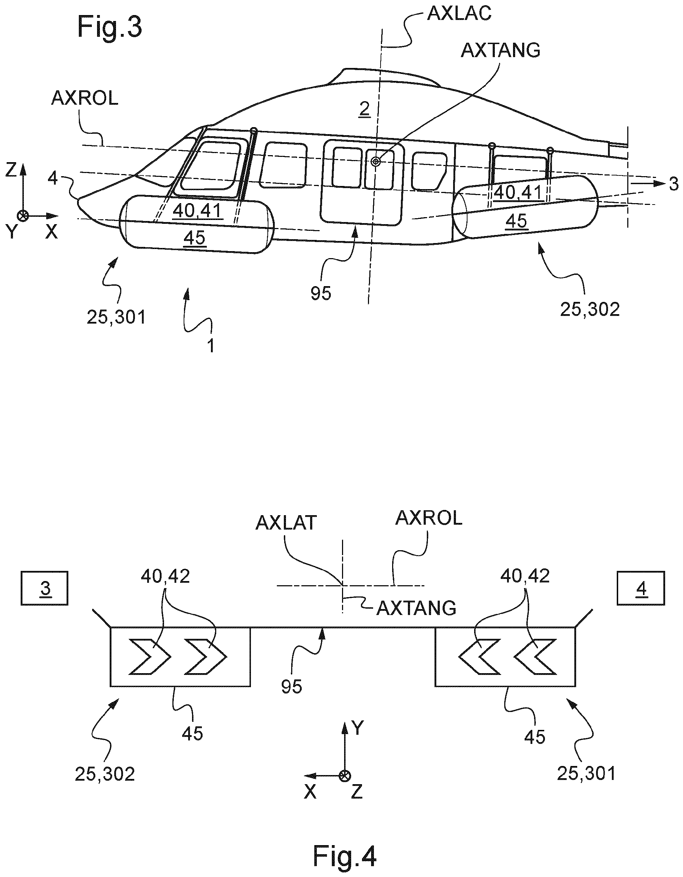

Cet aéronef 1 comprend une cellule 2. La cellule 2 s'étend longitudinalement le long d'un plan antéropostérieur 100 d'une extrémité avant 4 vers une extrémité arrière 3 visibles sur la figure 3. De plus, la cellule 2 s'étend transversalement d'un flanc gauche 7 vers un flanc droit 8 de part et d'autre du plan antéropostérieur 100, et en élévation d'une partie inférieure 5 vers une partie supérieure 6. Eventuellement, le plan antéropostérieur 100 est un plan de symétrie de l'aéronef 1. Les termes « gauche » et « droit » sont définis au regard d'un individu disposé dans la cellule et regardant devant lui vers l'avant 4 de l'aéronef 1.

La partie inférieure 5 comporte un fond de la cellule 2 alors que la partie supérieure 6 comporte le sommet de la cellule 2. La partie inférieure 5 est classiquement munie d'un train d'atterrissage 15, alors que la partie supérieure peut porter un rotor 9 participant à la sustentation voire à la propulsion de l'aéronef 1. Ce rotor 9 est mis en rotation par une installation motrice 10. Cette installation motrice 10 inclut au moins un moteur 11 voire au moins une boîte de transmission de puissance 12 interposée entre le moteur 11 et le rotor 9.

La cellule 2 peut porter d'autres rotors, et par exemple un rotor arrière participant au contrôle du mouvement en lacet de l'aéronef 1.

Indépendamment de la nature de l'aéronef 1, cet aéronef 1 est de plus pourvu d'un système de flottabilité 20 selon l'invention afin de pouvoir amerrir.

Un tel système de flottabilité 20 est pourvu de plusieurs flotteurs 25. Chaque flotteur 25 peut comprendre une enveloppe 26 qui flotte sur l'eau, cette enveloppe 26 emprisonnant un gaz par exemple. L'enveloppe 26 d'un flotteur 25 sépare alors un espace interne INT d'un flotteur 25 d'un milieu extérieur EXT situé à l'extérieur du flotteur 25.

Chaque flotteur 25 peut être attaché par son enveloppe 26 par au moins une ralingue 80, 85 à une structure de la cellule 2, à savoir par exemple à une paroi 13 de la cellule 2 ou à un train d'atterrissage 15... Par exemple, les flotteurs 25 sont reliés à une partie basse de l'aéronef 1 située à proximité, voire au niveau, du fond de la cellule. Le cas échéant, les flotteurs 25 peuvent être reliés à un train d'atterrissage à patins non représenté.

Certains flotteurs 25 voire chaque flotteur 25 peuvent être disposés à l'extérieur EXT de la cellule 2. L'expression « disposé à l'extérieur EXT de la cellule 2 » signifie que les flotteurs concernés sont au moins partiellement déployés en dehors de la cellule 2 pour faire flotter l'aéronef 1.

Les flotteurs 25 peuvent être appariés. Ainsi, une paire de flotteurs 25 comporte un flotteur gauche qui est disposé du côté du flanc gauche 7 de l'aéronef 1, et un flotteur droit qui est disposé du côté du flanc droit 8 de l'aéronef 1. Deux flotteurs 25 appariés peuvent être disposés symétriquement de part et d'autre du plan antéropostérieur 100 de symétrie de l'aéronef 1 dans une position stable de l'aéronef 1.

Par exemple, l'aéronef 1 comporte une voire deux paires 27 de flotteurs 25. Les figures 2 et 3 notamment illustrent un aéronef 1 ayant une paire de flotteurs 25 avant et une paire de flotteurs 25 arrière.

Indépendamment de la nature et de l'emplacement des flotteurs, la figure 1 illustre des flotteurs 25 pouvant être pliés et agencés dans un emballage 75 usuel, cet emballage 75 s'ouvrant lors du déploiement des flotteurs 25. Par exemple, les flotteurs 25 peuvent être des flotteurs gonflables, ces flotteurs gonflables présentant une enveloppe 26 qui se déplie par exemple quand un fluide est injecté dans cette enveloppe 26. Dès lors, les flotteurs 25 sont dégonflés en dehors des phases d'amerrissage, et gonflés pour flotter sur une surface liquide.

Dès lors, le système de flottabilité 20 comporte un système de déploiement 50 pour déployer les flotteurs 25, à savoir pour augmenter le volume des flotteurs 25. Lorsque ce système de déploiement 50 est activé, ce système de déploiement 50 permet de déployer les flotteurs 25 afin d'augmenter leurs volumes pour stabiliser l'aéronef 1 sur une surface liquide.

Dans ces conditions, le système de déploiement 50 peut comprendre au moins un actionneur 51, et par exemple un actionneur de type gonfleur. En présence d'un ou plusieurs gonfleurs, chaque gonfleur est en communication fluidique avec au moins un flotteur 25.

Par exemple, un unique actionneur 51 de type gonfleur est relié à tous les flotteurs 25 par une pluralité de conduites. Selon un autre exemple non représenté, le système de déploiement 50 comporte autant de gonfleurs que de flotteurs 25, chaque flotteur 25 étant relié par une conduite à un gonfleur qui lui est dédié. D'autres réalisations sont évidemment possibles, un même gonfleur pouvant gonfler un ou plusieurs flotteurs 25.

Le système de déploiement 50 peut comprendre un organe de commande 52 relié à chaque actionneur 51 pour commander son fonctionnement afin de déployer les flotteurs 25. L'expression « organe de commande 52 » désigne un organe manœuvrable par un pilote, tel que par exemple un bouton, une commande tactile, une commande vocale, une commande visuelle...

Le système de déploiement 50 peut comprendre un système de commande automatique 53 relié à chaque actionneur 51 pour commander le fonctionnement de chaque actionneur 51. L'expression « système de commande automatique 53 » désigne un système qui commande chaque actionneur 51 selon une logique prédéterminée, en générant un ordre de déploiement automatiquement lorsque des conditions prédéterminées sont remplies.

Le système de commande automatique 53 peut comporter un calculateur possédant par exemple au moins un processeur, au moins un circuit intégré, au moins un système programmable, un circuit logique, ces exemples ne limitant pas la portée donnée au terme « calculateur ». Ce calculateur peut être éventuellement armé par un moyen d'activation manœuvrable par un individu. Le moyen d'activation peut posséder au moins une position permettant de rendre actif le système de commande automatique 53. Ainsi, le système de commande automatique 53 peut être inhibé dans certaines situations, par exemple lorsque l'aéronef ne survole pas une surface liquide.

A titre illustratif, le calculateur peut être relié à des capteurs d'altitude pour requérir le fonctionnement du gonfleur lorsque l'aéronef 1 atteint une altitude seuil, le cas échéant sous réserve que le système de commande automatique 53 soit armé. Selon un autre exemple, le calculateur peut être relié à des capteurs d'immersion.

On peut se référer à l'état de la technique pour trouver des exemples de réalisation de gonfleurs et de systèmes de commande de ces gonfleurs pour déployer les flotteurs en vol avant amerrissage et/ou après amerrissage.

Indépendamment du nombre de flotteurs 25, de l'emplacement des flotteurs 25 et des organes pouvant le cas échéant déployer un flotteur 25, selon l'invention au moins un des flotteurs 25 est un flotteur lumineux 30. Par exemple, tous les flotteurs 25 peuvent être des flotteurs lumineux 30.

Chaque flotteur lumineux 30 présente au moins une source de lumière 35 interne qui disposée dans ledit espace interne INT de ce flotteur lumineux 30. En fonctionnement, chaque source de lumière 35 émet une lumière. Dès lors, l'enveloppe 26 d'un flotteur lumineux 30 est au moins partiellement translucide pour diffuser la lumière émise par chaque source de lumière 35 vers le milieu extérieur EXT. A cet effet, l'enveloppe 26 peut être réalisée à l'aide d'un tissu translucide.

Par ailleurs, chaque source de lumière 35 peut comporter une source primaire 36 déclenchée électriquement agencée dans l'espace interne INT d'un flotteur lumineux 30, et par exemple une ampoule ou équivalent.

Selon un autre aspect, l'aéronef 1 peut comporter au moins une source d'énergie électrique 38 reliée par une liaison électrique 39 à au moins une source de lumière 35 pour l'alimenter électriquement.

Une source d'énergie électrique 38 peut être agencée dans un flotteur lumineux 30 pour que ce flotteur lumineux 30 soit autonome électriquement.

Toutefois, selon l'exemple illustré en traits en pointillés une source d'énergie électrique 380 peut être déportée dans la cellule 2. Une telle source d'énergie électrique 380 déportée peut alimenter une ou plusieurs sources de lumière 35 d'un ou plusieurs flotteurs lumineux 30. Une telle source d'énergie électrique 380 déportée n'est pas nécessairement dédiée à cette fonction et peut alimenter d'autres équipements électriques.

Selon un autre aspect, l'aéronef 1 peut comporter un organe électrique commandable 37 pour alimenter électriquement sur commande au moins une source de lumière 35. Par exemple, un tel organe électrique commandable 37 est agencé sur la liaison électrique liant électriquement une source d'énergie électrique 38 et au moins une source de lumière 35.

Un organe électrique commandable 37 peut être agencé dans le flotteur lumineux 30 pour que ce flotteur lumineux 30 soit autonome électriquement.

Toutefois, selon l'exemple illustré en traits en pointillés un organe électrique commandable 370 peut être déporté dans la cellule 2. Un tel organe électrique commandable 370 déporté peut être relié électriquement à une ou plusieurs sources de lumière 35 d'un ou plusieurs flotteurs lumineux 30.

Indépendamment de son emplacement, chaque organe électrique commandable 37, 370 peut être commandé par l'organe commandant le déploiement d'un flotteur 25, 30. Ainsi, chaque organe électrique commandable 37, 370 peut être relié par des liaisons non représentées par exemple à l'organe de commande 52 et/ou au système de commande automatique 53.

Par ailleurs, selon l'exemple de la figure 1 l'enveloppe 26 d'un flotteur lumineux 30 peut être totalement translucide.

En référence à la figure 2, un aéronef 1 peut comprendre des flotteurs lumineux avant 301 et arrière 302. Ainsi, un flotteur lumineux avant 301 et un flotteur lumineux arrière 302 peuvent être situés longitudinalement de part et d'autre d'une sortie de l'aéronef 1 et par exemple d'une sortie 95.

Indépendamment de cet aspect, l'enveloppe 26 d'au moins un flotteur lumineux 30 voire de tous les flotteurs 25 selon la figure 2 est partiellement translucide. L'enveloppe 26 comprend alors au moins une portion opaque 40 empêchant la diffusion d'une lumière vers le milieu extérieur EXT et une portion au moins partiellement translucide.

Par exemple, l'enveloppe 26 comporte un tissu opaque pour chaque portion opaque 40 fixée à un tissu translucide. Selon un autre exemple, l'enveloppe 26 comporte un tissu translucide recouvert par endroit par un tissu opaque.

Par exemple, l'enveloppe 26 d'un flotteur lumineux 30 comporte en élévation de bas en haut parallèlement à un axe de lacet AXLAC de l'aéronef 1 un tronçon inférieur 45 au moins partiellement translucide au dessus duquel se trouve une portion opaque 41.

Conformément à la figure 3, le tronçon inférieur 45 et la portion opaque 40 sont visibles tous deux selon une direction parallèle à l'axe de tangage AXTANG de l'aéronef 1. La portion opaque 40 permet d'éviter d'éblouir un pilote par exemple.

De manière complémentaire ou alternative, une portion opaque 40 peut prendre la forme d'un symbole interprétable par un passager ou un sauveteur. Par exemple, une portion opaque 40 peut prendre la forme d'une flèche.

En référence à la figure 4, le tronçon inférieur 45 peut être partiellement translucide en comprenant au moins une portion opaque 40 en forme de flèche 42, et deux portions opaques 40 en forme de flèche 42 selon l'exemple. Chaque portion opaque 40 en forme de flèche 42 est dirigée selon une direction parallèle à une direction allant d'un nez 4 de l'aéronef 1 vers une sortie 95 de l'aéronef 1 pour un flotteur lumineux avant 301 ou de la queue 3 de l'aéronef 1 vers la sortie 95 pour un flotteur lumineux arrière 302. Chaque portion opaque en forme de flèche 42 est visible selon une direction parallèle à un axe de lacet AXLAC de l'aéronef 1 pour notamment être visible par un sauveteur suite à un retournement de l'aéronef 1 dans l'eau.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles.

## Revendications

1. Aéronef (1) muni d'un système de flottabilité (20), ledit système de flottabilité (20) comprenant une pluralité de flotteurs (25), chaque flotteur (25) comportant une enveloppe (26) séparant un espace interne (INT) du flotteur (25) d'un milieu extérieur (EXT), tel qu'au moins un desdits flotteurs est un flotteur lumineux (30), **caractérisé en ce que** le flotteur lumineux (30) comporte au moins une source de lumière (35) interne disposée dans ledit espace interne (INT) de ce flotteur lumineux (30), ladite enveloppe (26) d'un flotteur lumineux (30) étant au moins partiellement translucide.

2. Aéronef selon la revendication 1,
**caractérisé en ce que** ladite source de lumière (35) comporte une source primaire déclenchée électriquement agencée dans ledit espace interne (INT).

3. Aéronef selon l'une quelconque des revendications 1 à 2,
**caractérisé en ce que** ledit aéronef (1) comporte au moins un organe électrique commandable (37) alimentant électriquement sur commande au moins une dite source de lumière (35).

4. Aéronef selon la revendication 3,
**caractérisé en ce que** ledit organe électrique commandable (37) est agencé dans ledit espace interne (INT).

5. Aéronef selon l'une quelconque des revendications 1 à 4,
**caractérisé en ce que** ledit aéronef (1) comporte au moins une source d'énergie électrique (38) reliée par une liaison électrique (39) à au moins une dite source de lumière (35).

6. Aéronef selon la revendication 5,
**caractérisé en ce que** ladite source d'énergie électrique (38) est agencée dans ledit espace interne (INT).

7. Aéronef selon l'une quelconque des revendications 1 à 6,
**caractérisé en ce que** ladite enveloppe (26) d'un flotteur lumineux (30) est totalement translucide.

8. Aéronef selon l'une quelconque des revendications 1 à 6,
**caractérisé en ce que** ladite enveloppe (26) d'un flotteur lumineux (30) est partiellement translucide, ladite enveloppe (26) comprenant au moins une portion opaque (40) empêchant la diffusion d'une lumière vers le milieu extérieur (EXT).

9. Aéronef selon la revendication 8,
**caractérisé en ce que** ladite enveloppe (26) d'un flotteur lumineux (30) comporte en élévation de bas en haut parallèlement à un axe de lacet (AXLAC) de l'aéronef (1) un tronçon inférieur (45) au moins partiellement translucide et une dite portion opaque (41), le tronçon inférieur au moins partiellement translucide et la portion opaque étant tous deux visibles selon une direction parallèle à un axe de tangage (AXTANG) de l'aéronef (1).

10. Aéronef selon l'une quelconque des revendications 8 à 9,
**caractérisé en ce que** ladite enveloppe (26) d'un flotteur lumineux (30) comporte un tronçon (45) partiellement translucide muni d'au moins une dite portion opaque en forme de flèche (42) dirigée selon une direction parallèle à une direction allant d'un nez (4) de l'aéronef (1) vers une sortie (95) de l'aéronef (1) ou de la queue (3) de l'aéronef (1) vers ladite sortie (95), ladite portion opaque en forme de flèche (42) étant visible selon une direction parallèle à un axe de lacet (AXLAC) de l'aéronef (1).

11. Aéronef selon l'une quelconque des revendications 1 à 10,
**caractérisé en ce que** chaque flotteur est un flotteur lumineux.

## Patentansprüche

1. Flugzeug (1), das mit einem Auftriebssystem (20) versehen ist, wobei das Auftriebssystem (20) eine Mehrzahl von Schwimmern (25) umfasst, wobei jeder Schwimmer (25) eine Hülle (26) umfasst, die einen Innenraum (INT) des Schwimmers (25) von einer Umgebung (EXT) trennt, wobei mindestens einer der Schwimmer ein Leuchtschwimmer (30) ist, **dadurch gekennzeichnet, dass** der Leuchtschwimmer (30) mindestens eine innere Lichtquelle (35) aufweist, die in dem Innenraum (INT) dieses Leuchtschwimmers (30) angeordnet ist, wobei die Hülle (26) eines Leuchtschwimmers (30) zumindest teilweise durchscheinend ist.

2. Luftfahrzeug nach Anspruch 1,
**dadurch gekennzeichnet, dass** die Lichtquelle (35) eine elektrisch ausgelöste Primärquelle umfasst, die in dem Innenraum (INT) angeordnet ist.

3. Luftfahrzeug nach einem der Ansprüche 1 bis 2,
**dadurch gekennzeichnet, dass** das Luftfahrzeug (1) mindestens ein elektrisch steuerbares Element (37) umfasst, das auf Befehl mindestens eine besagte Lichtquelle (35) elektrisch versorgt.

4. Luftfahrzeug nach Anspruch 3,
**dadurch gekennzeichnet, dass** das elektrisch steuerbare Element (37) in dem Innenraum (INT) angeordnet ist.

5. Luftfahrzeug nach einem der Ansprüche 1 bis 4,
**dadurch gekennzeichnet, dass** das Luftfahrzeug (1) mindestens eine elektrische Energiequelle (38) umfasst, die über eine elektrische Verbindung (39) mit mindestens einer besagten Lichtquelle (35) verbunden ist.

6. Luftfahrzeug nach Anspruch 5,
**dadurch gekennzeichnet, dass** die elektrische Energiequelle (38) in dem Innenraum (INT) angeordnet ist.

7. Luftfahrzeug nach einem der Ansprüche 1 bis 6,
**dadurch gekennzeichnet, dass** die Hülle (26) eines Leuchtschwimmers (30) vollständig durchscheinend ist.

8. Luftfahrzeug nach einem der Ansprüche 1 bis 6,
**dadurch gekennzeichnet, dass** die Hülle (26) eines Leuchtschwimmers (30) teilweise durchscheinend ist, wobei die Hülle (26) mindestens einen lichtundurchlässigen Teil (40) umfasst, der die Streuung von Licht in die Umgebung (EXT) verhindert.

9. Luftfahrzeug nach Anspruch 8,
**dadurch gekennzeichnet, dass** die Hülle (26) eines Leuchtschwimmers (30) in der Höhe von unten nach oben parallel zu einer Gierachse (AXLAC) des Luftfahrzeugs (1) einen unteren Abschnitt (45), der zumindest teilweise lichtdurchlässig ist, und einen besagten lichtundurchlässigen Teil (41) umfasst, wobei der zumindest teilweise lichtdurchlässige untere Abschnitt und der lichtundurchlässige Teil entlang einer zu einer Nickachse (AXTANG) des Luftfahrzeugs (1) parallelen Richtung beide sichtbar sind.

10. Luftfahrzeug nach einem der Ansprüche 8 bis 9,
**dadurch gekennzeichnet, dass** die Hülle (26) eines Leuchtschwimmers (30) einen teilweise durchscheinenden Abschnitt (45) umfasst, der mit mindestens einem besagten undurchsichtigen Teil (42) in Form eines Pfeils versehen ist, der in einer Richtung parallel zu einer Richtung von einer Nase (4) des Flugzeugs (1) zu einem Ausgang (95) des Flugzeugs (1) oder von dem Heck (3) des Flugzeugs (1) zu dem Ausgang (95) gerichtet ist, wobei der undurchsichtige pfeilförmige Teil (42) in einer zu einer Gierachse (AXLAC) des Luftfahrzeugs (1) parallelen Richtung sichtbar ist.

11. Luftfahrzeug nach einem der Ansprüche 1 bis 10,
**dadurch gekennzeichnet, dass** jeder Schwimmer ein Leuchtschwimmer ist.

## Claims

1. Aircraft (1), provided with a buoyancy system (20), said buoyancy system (20) including a plurality of floats (25), each float (25) comprising a casing (26) that separates an internal space (INT) of the float (25) from an external environment (EXT), such that at least one of said floats is a luminous float (30), **characterised in that** the luminous float (30) comprises at least one internal light source (35) arranged in said internal space (INT) of this luminous float (30), said casing (26) of a luminous float (30) being at least partially translucent.

2. Aircraft according to claim 1, **characterised in that** said light source (35) comprises an electrically activated primary source arranged in said internal space (INT).

3. Aircraft according to either claim 1 or claim 2, **characterised in that** said aircraft (1) comprises at least one controllable electric member (37) that supplies electricity to at least one said light source (35) on command.

4. Aircraft according to claim 3, **characterised in that** said controllable electrical member (37) is arranged in said internal space (INT).

5. Aircraft according to any of claims 1 to 4, **characterised in that** said aircraft (1) comprises at least one source of electrical energy (38) connected to at least one said light source (35) via an electrical connection (39).

6. Aircraft according to claim 5, **characterised in that** said source of electrical energy (38) is arranged in said internal space (INT).

7. Aircraft according to any of claims 1 to 6, **characterised in that** said casing (26) of a luminous float (30) is completely translucent.

8. Aircraft according to any of claims 1 to 6, **characterised in that** said casing (26) of a luminous float (30) is partially translucent, said casing (26) including at least one opaque portion (40) that prevents a light diffusing towards the external environment (EXT).

9. Aircraft according to claim 8, **characterised in that** said casing (26) of a luminous float (30) comprises, elevationally from bottom to top in parallel with a yaw axis (AXLAC) of the aircraft (1), an at least partially translucent lower part (45) and one such opaque portion (41), the at least partially translucent lower part and the opaque portion both being visible in a direction parallel to a pitch axis (AXTANG) of the aircraft (1).

10. Aircraft according to either claim 8 or claim 9, **characterised in that** said casing (26) of a luminous float (30) comprises a partially translucent part (45) provided with at least one said opaque portion in the shape of an arrow (42) that is directed in a direction parallel to a direction running from a nose (4) of the aircraft (1) to an exit (95) of the aircraft (1) or from the tail (3) of the aircraft (1) to said exit (95), said opaque arrow-shaped portion (42) being visible in a direction parallel to a yaw axis (AXLAC) of the aircraft (1).

11. Aircraft according to any of claims 1 to 10, **characterised in that** each float is a luminous float.
